# EUROPÄISCHE PATENTANMELDUNG

(11) **EP 1 505 212 A1**
(43) Veröffentlichungstag der Anmeldung: **09.02.2005**
(21) Anmeldenummer: 03018026.9
(22) Anmeldetag: 07.08.2003
(51) Int. Cl.: E02D 31/06, A01F 25/14, B65D 90/04, E04H 7/18

(54) **Verfahren zur Abdichtung von Gebäudeanlagen**

(71) Anmelder: Braun, Winfried, D-39345 Bülstringen (DE)
(72) Erfinder: Braun, Winfried, D-39345 Bülstringen (DE)
(74) Vertreter: Thiel, Christian, Dr. Dipl.-Chem.

(57) **Zusammenfassung**

Die Erfindung betrifft ein Verfahren zur Sanierung von bestehenden Gebäudeanlagen und/oder zur Abdichtung von Neubauten zur Lagerung von schüttgutfähigen Feldprodukten, wobei auf das Mauerwerk selbstklebende, dampfdiffusionshemmende Folien, insbesondere lebensmittelverträgliche, innenseitig aufgebracht werden.

## Beschreibung

Die Erfindung betrifft ein Verfahren zur Sanierung von bestehenden Gebäudeanlagen und/oder zur Abdichtung von Neubauten zur Lagerung von schüttgutfähigen Feldprodukten.

Ferner betrifft die Erfindung die Verwendung von selbstklebenden, dampfdiffusionshemmenden Folien, insbesondere lebensmitteltauglichen, für das erfindungsgemäße Verfahren.

Als wichtiger Rohstoff in der Kette der Ernährung von Mensch und Tier hat Getreide den größten Anteil. Besonderes Augenmerk gilt deshalb den physiologischen Bedingungen während des Lager, Be- und Verarbeitungsprozesses.

Die Hauptverluste bei der Getreidelagerung werden durch tierische Vorratsschädlinge, insbesondere Käfer, Motten, Milben und durch deren Atmungsprozeß als negativer Einfluß auf die natürlich vorhandenen Mikroorganismen, verursacht. In frischen und alterntigem gut gelagerten Ähren und Halmfrüchten dominieren als natürliche äußere Flora die Bakterien. Leitflora von frischem Getreide sind lactosenegative Enterobacteriaceae (wie Erwinia herbicula, Enterobacter u. a.); weitere häufig vorkommende gramnegative Stäbchenbakterien sind aerob wachsende Gattungen Pseudomonas, Xanthomonas, Alcaligenes und Flavobacterium sowie die fakultativ anaerobe Gattung Aeromonas. Zahlreiche andere Bakteriengruppen, wie Sporenbildner (Clostridium, Bacillus) und Milchsäurebakterien, können ebenfalls vorkommen.

Auch Pilze aus der Gattungen Fusarium und Alternaria sind mehr oder weniger häufig vorhanden.

Als Naturprodukt bedarf es daher vorbeugender und wirksamer Maßnahmen der Qualitätserhaltung und -verbesserung. Zu diesen Maßnahmen gehören sowohl Reinigung, Belüftung als auch erforderliche Begasungen der Bestände.

Bei herkömmlichen Anlagen werden heutzutage vor dem Belegen mit Feldprodukten die Anlage mit inerten Gasen begast. Die Bekämpfung von tierischen Schädlingen, wie diverse Arten von Getreide-, Mehl- und Futtermittelkäfer, Motten, Milben, Staubläusen und Nagetieren, wird üblicherweise mit Methylbromid, Phosphorwasserstoff, Blausäure oder Kohlendioxid oder deren Gasgemische durchgeführt.

Hinsichtlich der qualitätserhaltenden und qualitätsverbessernden Be- und Verarbeitungsprozesses an lagernden Produkten muß die Begasungsdauer eingehalten werden. Besonders bei der Vorratsbekämpfung sind Materialschwächen im Mauerwerk hindernd. Die Seiten- und Außenwände sind häufig aus Beton, der je nach Güteklasse mehr oder weniger gas- und dampfdurchlässig ist. Der Boden ist in der Regel eine Bitumen- oder Betonsohle. Das Problem hierbei liegt im Material des Bauwerks, das das Gashaltevermögen nicht wirksam bzw. nicht dauerhaft gewährleisten kann. Durch diese Schwächen können keine effektiven Gaskonzentrationen erreicht werden.

Es besteht die Gefahr, daß das Gas durch die Wände entweicht und die Konzentration des gasförmigen Wirkstoffes zur Bekämpfung der Schädlinge verdünnt wird. Als Folge können nicht abgetötete Schädlinge genetische Veränderungen durchlaufen und langsam eine Resistenz gegenüber dem eingesetzten Wirkstoff entwickeln. Dies bedeutet letztendlich einen explosionsartigen Anstieg der Vorratsschädlinge.

Der Erfolg einer so wichtigen Bearbeitungsmaßnahme hängt im Wesentlichen von einer dauerhaft anhaltenden ausreichenden Gaskonzentration ab. Zur Gewährleistung wird in der Regel vor der Befüllung der Anlagen eine dampfdichte Folie lose vor die Betonwand gehängt, um diesen Verdünnungseffekten entgegenzuwirken. Jedoch ist der so geschaffene lose Zwischenraum zwischen Folie und Wand phytosanitär und hygienisch bedenklich. Denn in diesem Zwischenraum können Schädlinge sich verstecken und weiter Unheil anrichten. Besonders bedenklich sind jedoch Risse und Lecke im Mauerwerk, wo sich Mikroorganismen und Pilze ansiedeln und vermehren können. Auch ist diese Handhabung unwirtschaftlich und zeitaufwendig.

Zudem sind die gesetzlichen Anforderungen bei der Rückverfolgbarkeit von Lebensmitteln bezüglich des Verbraucherschutzes restriktiver geworden, so dass es von großer Bedeutung ist, ein Verfahren zu entwickeln, mit dem es möglich ist, Getreideverarbeitungsanlagen und Lagerstätten derart zu sanieren, dass die Qualität von Getreide, Futtermitteln und sonstigen Feldfrüchten über die Lagerung erhalten bleibt.

Aufgabe der Erfindung ist es daher, ein derartiges Verfahren zur Verfügung zustellen.

Zur Lösung dieser Aufgabe schlägt die Erfindung, ausgehend von einem Verfahren der eingangs genannten Art vor, dass auf das Mauerwerk selbstklebende, dampfdiffusionshemmende Folien, insbesondere lebensmittelverträgliche, innenseitig aufgebracht werden.

Durch das Aufkleben der Folie wird ein Überlebensraum für Mikroorganismen und Schädlinge zwischen Wand und Folie verhindert. Sie bildet mit der Innenwand des Bearbeitungsraumes eine fest verbundene plastische Einheit mit guten hygienischen Bedingungen und einer hohen Gasdichtigkeit.

Folien, die sowohl selbstklebend und dampfdiffusionshemmend als auch lebensmitteltauglich sind, können für das erfindungsgemäße Verfahren verwandt werden.

Bei bestehenden Anlagen oder auch bei Neubauten wird vor dem Aufbringen der Folie das Mauerwerk
- einer Inspektion,
- einer Überprüfung der vorhandenen baulichen Materialsubstanz,
- gegebenenfalls einer Ausbesserung von Betonfehlstellen,
- einer Grundreinigung der Anlagen und
- einer Desinfizierung der Innenseite der Betonwände
unterzogen.

Vor dem Aufbringen der Folie werden Wand- und Bodenflächen inspiziert, gegebenenfalls Kernbohrungen aus Wand- und Bodenfläche zur Prüfung der vorhandenen baulichen Materialsubstanz durchgeführt, so daß Fehlstellen bzw. Risse dementsprechend beseitigt werden können. Es kommen sowohl Beschichtungen mit einem neuen Material sowie die Ausbesserung von Betonfehlstellen bzw. Abdichtung der bauseitig bedingten vorhandenen Fugen in Frage.

Bei der Grundreinigung handelt es sich vorzugsweise um eine Dampfgasreinigung.

Eine Desinfizierung der porösen innenseitigen Betonwände ist unbedingt erforderlich, denn dadurch werden in Rissen und Lücken vorhandene Schädlinge und Mikroorganismen abgetötet. Als Begasungsmittel kommen die im Wirtschaftszweig zugelassenen üblichen Leerraum-Entwesungsmittel sowie die bei der Rohstoffbegasung verwendeten Gasprodukte zur Anwendung.

Vor dem Bekleben werden die Innenwände mit einem herkömmlichen Voranstrich aus einer wasserverdünnbaren Bitumen-Kautschuk-Emulsion behandelt. Dies dient zur Haftverbesserung der selbstklebenden Folie. Andere lebensmittelverträgliche Voranstriche kommen ebenso in Frage.

Danach werden die Wände mit Folien bis an den Bodenbereich und in allen übergehenden Wandkehlen überklebt. Die An- bzw. Abstoßstellen werden idealerweise mit Fixier- oder Stoßbändern abgedichtet. Einerseits dienen die Bänder zur zusätzlichen Abdichtung, andererseits auch als Kontaktbarriere, damit Feldprodukte und bitumenhaltige bzw. nicht lebensmitteltaugliche Klebemittel nicht in Berührung kommen.

Aufgrund der lebensmittelrechtlichen Bestimmungen ist es wünschenswert, lebensmitteltaugliche Klebemittel zu verwenden. Bei nicht lebensmitteltauglichen Klebemitteln werden geeignete Maßnahmen herangezogen, die verhindern, daß schädliche Moleküle in das Lebensmittel gelangen.

Bevorzugt werden im Bodenbereich Rammschutzelemente angebracht, um grobe mechanische Beschädigungen bei Befüllungs- und Entleerungsarbeiten mit großen Arbeitsmaschinen zu vermeiden. Bevorzugt werden demontable Kanthölzer herangezogen.

Auch ist es möglich, die Wände nur teilweise mit Folie abzukleben, da eventuell vorhandene Fenster bzw. Öffnungen frei bleiben sollen.

Bevorzugt werden Folien aus Naturmaterialien, vorzugsweise aus Kautschuk, verwandt; für die Folien können vulkanisierte Kautschuke oder synthetische Harze verwandt werden. Selbstklebende Kautschukfolien, die für erfindungsgemäße Zwecke eingesetzt werden können, sind an und für sich bekannt.

Vorzugsweise werden Folienbahnen mit handelsüblichen Bahnenmaßen von 1,0 m Breite und 5,0 m oder 10,0 m Länge verwandt. Jedoch können gegebenenfalls auch andere Maße herangezogen werden. Idealerweise werden die Länge der Bahnen der Innenwandhöhe angepaßt.

Besonders bevorzugt werden Folienbahnen verwandt, die abwaschbar sind.

Weiterer Gegenstand der Erfindung ist die Verwendung von selbstklebenden, insbesondere lebensmitteltauglichen Folien für die Herrichtung von Gebäuden, die für die Be- und Verarbeitung der Rohstoffe in der Getreide- und Futtermittelbranche genutzt werden.

Unter "lebensmitteltauglich" wird eine Verträglichkeit der Folie bzw. des Klebemittels mit Lebensmitteln und Futtermitteln gemäß den lebensmittelrechtlichen Bestimmungen verstanden, wobei es sich bei den Lebensmitteln um Getreide, Getreidemahlprodukte, Feldfrüchte und daraus hergestellte Zwischenprodukte handelt.

Nachstehend wird ein Sanierungskonzept beispielhaft aufgeführt.
1.) Inspektion der Wand- und Bodenfläche,
2.) Kernbohrungen aus Wand und Boden zur Prüfung der vorhandenen baulichen Materialsubstanz,
3.) vorbereitende Konzipierung der vorzunehmenden Arbeiten,
4.) bauliche Vorbereitung zur Beschichtung mit dem neuen Material, wie Bearbeitung der Sohle, Ausbesserung von Betonfehlstellen und gegebenenfalls Abdichtung der bauseitig bedingt vorhandenen Fugen,
5.) Grundreinigung der Be- und Verarbeitungsanlagen,
6.) Desinfizierung der porösen Betonwände innen,
7.) Aufbringung des Voranstrichs,
8.) Überkleben der Wände bis unmittelbar an den Bodenbereich und über alle übergehenden Wandkehlen mit der dampfdiffusionshemmenden Folie,
9.) Anbringen eines als Rammschutz geeigneten demontablen Kantholzes im Bodenbereich zur Vermeidung von grober mechanischer Beschädigung bei Befüllungs- und Entleerungsarbeiten mit großen Arbeitsmaschinen,
10.) nach Abschluß der Sanierungsarbeiten die Freigabe für den Bearbeitungsprozess,
11.) Dokumentation der Vorgänge in der Gesamtheit der im Qualitätsmanagement vorhandenen Vorgaben wie DIN-ISO 9001-2000 und HACCP-Richtlinien,
12.) Festlegung der Eignung für den Be- und Verarbeitungsprozeß in diesen Arbeitsanlagen vor, während und nach der Belegung der Anlagen im Beund Verarbeitungsprozeß mit den vorhandenen Lagegütern,

Das Sanierungskonzept wird anschließend in seiner Gesamtheit durch einen im Gewerbe der Getreide- und Futtermittel Be- und Verarbeitung tätigen Fachmann überprüft und gutachtlich bestätigt.

Das erfindungsgemäße Verfahren resultiert in einer hygienisch und phytosanitär geeigneten Anlage zur Lagerung, Be- und Verarbeitung von Getreide und Futtermitteln oder sonstiger Feldfrüchte.

Die Belüftung und Begasung zur Qualitätserhaltung gestaltet sich problemloser als vor der durchgeführten Sanierung, denn die Wand und die Folie in ihrer fest verbundenen Einheit sind völlig glatt und somit auch sauber und hygienisch. Das Abwaschen der Anlage ist einfach und schnell.

## Patentansprüche

1. Verfahren zur Sanierung von bestehenden Gebäudeanlagen und/oder zur Abdichtung von Neubauten zur Lagerung von schüttgutfähigen Feldprodukten, **dadurch gekennzeichnet, daß** auf das Mauerwerk selbstklebende und dampfdiffusionshemmende Folien, insbesondere lebensmittelverträgliche, innenseitig aufgebracht werden.

2. Verfahren nach Anspruch 1, **dadurch gekennzeichnet, daß** vor dem Aufbringen der Folie das Mauerwerk
- einer Inspektion,
- einer Überprüfung der vorhandenen baulichen Materialsubstanz,
- gegebenenfalls einer Ausbesserung von Betonfehlstellen,
- einer Grundreinigung der Anlage und
- einer Desinfizierung der Innenseite der Betonwände,
unterworfen wird.

3. Verfahren nach Anspruch 2, **dadurch gekennzeichnet, dass** nach der Desinfizierung die Innenwände mit einem Voranstrich, vorzugsweise einer Bitumen-Kautschuk-Emulsion, behandelt werden.

4. Verfahren nach Anspruch 3, **dadurch gekennzeichnet, daß** die Innenwände der Anlage mit Folien bis an den Bodenbereich und in allen übergehenden Wandkehlen beklebt werden.

5. Verfahren nach Anspruch 4, **dadurch gekennzeichnet, daß** im Bodenbereich Rammschutzelemente angebracht werden.

6. Verfahren nach Anspruch 5, **dadurch gekennzeichnet, daß** es sich bei den Rammschutzelementen um demontable Kanthölzer handelt.

7. Verfahren nach Anspruch 6, **dadurch gekennzeichnet, daß** der Lagerraum nach der Sanierung mit Begasungsmitteln begast wird.

8. Verfahren nach Anspruch 7, **dadurch gekennzeichnet, daß** als Begasungsmittel Methylbromid, Phosphorwasserstoff, Blausäure, Kohlendioxid und Stickstoff, verwandt werden.

9. Verfahren nach Anspruch 8, **dadurch gekennzeichnet, daß** der Lagerraum nur teilweise mit Folien abgeklebt wird.

10. Verfahren nach Anspruch 9, **dadurch gekennzeichnet, daß** die Folie aus Naturmaterialien, vorzugsweise aus Kautschuk, besteht.

11. Verfahren nach Anspruch 10, **dadurch gekennzeichnet, daß** Folienbahnen, mit handelsüblichen Maßen von 1 m Breite und 5 m oder 10 m Länge verwandt werden.

12. Verfahren nach Anspruch 11, **dadurch gekennzeichnet, daß** die Länge der Folienbahnen der Innenwandhöhe angepaßt werden.

13. Verfahren nach Anspruch 12, **dadurch gekennzeichnet, daß** vor der Folienverklebung die Wände mit Dampf gereinigt werden.

14. Verfahren nach Anspruch 13, **dadurch gekennzeichnet, daß** die Folienbahnen abwaschbar sind.

15. Verfahren nach Anspruch 14, **dadurch gekennzeichnet, daß** Anschlußstellen zwischen Folienbahnen und Abschlußstellen am Boden und an der Decke mit An- und Abschlußbänder abgedichtet werden.

16. Verfahren nach Anspruch 15, **dadurch gekennzeichnet, daß** die Innenwände mit verklebten Folienbahnen eine plastische Einheit bilden.

17. Verwendung von selbstklebenden, dampfdiffusionshemmenden Folien, insbesondere lebensmitteltauglichen, für die Herrichtung von Gebäuden für die Lagerung von Rohstoffen, die zur Mehl- und Futtermittelherstellung für menschliche und tierische Ernährung geeignet sind.
